(19) Europäisches Patentamt
European Patent Office
Office européen des brevets

(11) **EP 4 372 417 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **22208244.8**

(22) Anmeldetag: **18.11.2022**

(51) Internationale Patentklassifikation (IPC):
**G01S 17/00** (2020.01)   **G06F 30/27** (2020.01)

(52) Gemeinsame Patentklassifikation (CPC):
**G01S 17/006; G06F 30/27;** G06F 2111/08; G06F 2111/18

(54) **VERFAHREN ZUR MODELLIERUNG EINES SENSORS IN EINER TESTUMGEBUNG**

METHOD FOR MODELLING A SENSOR IN A TEST ENVIRONMENT

PROCÉDÉ DE MODÉLISATION D'UN CAPTEUR DANS UN ENVIRONNEMENT DE TEST

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**22.05.2024 Patentblatt 2024/21**

(73) Patentinhaber: **SICK AG**
**79183 Waldkirch (DE)**

(72) Erfinder:
• **Wittmeier, Steffen**
**79183 Waldkirch (DE)**
• **Ruh, Dominic**
**79102 Freiburg (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
EP-A1- 3 637 138       US-A1- 2018 203 445
US-A1- 2022 058 309    US-A1- 2022 269 279

• **EMDE MARKUS ET AL: "Modelling and Simulation of a Laser Scanner with Adjustable Pattern as Virtual Prototype for Future Space Missions", 2015 3RD INTERNATIONAL CONFERENCE ON ARTIFICIAL INTELLIGENCE, MODELLING AND SIMULATION (AIMS), IEEE, 2 December 2015 (2015-12-02), pages 191 - 196, XP032983838, DOI: 10.1109/AIMS.2015.83**

## Beschreibung

Die Erfindung betrifft ein Verfahren zur Modellierung eines Sensors, insbesondere eines FMCW-LiDAR-Sensors, in einer virtuellen Testumgebung, insbesondere zur Vorentwicklung und/oder zum Testen von Algorithmen bzw. Software im industriellen Umfeld und/oder insbesondere zum Testen von Software für mobile Roboter und/oder für Flurförderfahrzeuge.

Aktuell wird die Entwicklung performanter, hochintegrierter Sensortechnologien, wie beispielsweise FMCW-LiDAR-Sensoren oder Imaging-RADAR-Sensoren, vorangetrieben. Der Einsatz derartiger Sensoren ist für eine Vielzahl von Applikationen insbesondere mit Bezug auf mobile Roboter und/oder Flurförderfahrzeuge von entscheidender Bedeutung. Entsprechend müssen neue Sensortechnologien und ihre Performanz in den entsprechenden Applikationen vor einer kommerziellen Benutzung getestet werden. In WO2021004626A1 wird ein Verfahren zur Simulation von CW-LiDAR-Sensoren beschrieben, bei dem eine komplexe und aufwendige Simulation des Messprinzips durchgeführt wird, um die Funktionsweise eines realen CW-LiDAR-Sensors realitätsgetreu nachzubilden.

Ein Nachteil dieser Methode ist, dass eine große Menge an sensorspezifischen Informationen erforderlich ist, um die tatsächliche Funktionsweise des CW-LiDAR-Sensors zu simulieren. Ferner ist die Simulation des CW-LiDAR Sensors auf dieser Abstraktionsebene sehr aufwendig und rechenintensiv.

EMDE MARKUS et al. ("Modelling and Simulation of a Laser Scanner with Adjustable Pattern as Virtual Prototype for Future Space Missions", 2015 3RD INTERNATIONAL CONFERENCE ON ARTIFICIAL INTELLIGENCE, MODELLING AND SIMULATION (AIMS), IEEE, 2. Dezember 2015 (2015-12-02), Seiten 191-196, XP032983838, DOI: 10.1109/AIMS.2015.83 [gefunden am 2016-10-20]) offenbart eine Simulation eines Laserscanners, bei der ein Line-of-Sight-Fehler-Generator gaußverteilte Fehlermodelle verwendet, um fehlerhafte Azimut- und Höhenwinkelwerte zu erzeugen, welche zur Reorientierung des Laserscanners verwendet werden. EP 3 637 138 A1 offenbart ein Verfahren zur Simulation eine LiDAR-Laserstrahls, bei dem ein Ursprungsbereich des Laserstrahls in mehrere Ursprünge aufgeteilt wird, wobei die Ausbreitung des Laserstrahl mit einer Wahrscheinlichkeit modelliert werden kann. US 2022/058309 A1 lehrt ein Verfahren zum Testen von Software für ein autonomes Fahrzeug, wobei die simulierte Testumgebung basierend auf echten Umgebungsdaten erzeugt wird und basierend auf den simulierten LiDAR-Daten die Bewegungsrichtung und die Geschwindigkeit eines erfassten Objekt ermittelt werden kann. US 2018/203445 A1 beschreibt ein Verfahren, bei dem eine Vielzahl von Sensoren simuliert werden, wobei die simulierten Sensorausgabewerte zum Trainieren eines Maschine-Learning-Modells verwendet werden, welches beispielsweise in einem echten Fahrzeug zur Kollisionsvermeidung verwendet wird. US 2022/269279 A1 bezieht sich auf ein Computersystem zum Testen eines Robotersystems, wobei bei einer Objektdetektion Detektionswahrscheinlichkeiten gemessen werden, indem eine Detektionswahrscheinlichkeitsverteilung abhängig von einer Distanz oder einem Winkel aufgestellt wird.

Eine der Erfindung zugrundeliegende Aufgabe ist es somit, ein verbessertes Verfahren zur Untersuchung von (neuen) Sensoren im Kontext bereits bestehender oder neuer Applikationen sowie ein entsprechendes System bereitzustellen. Diese Aufgabe wird durch ein Verfahren nach Anspruch 1 sowie ein System nach Anspruch 13 gelöst.

Die Erfindung betrifft ein computerimplementiertes Verfahren zur Modellierung eines Sensors, insbesondere eines FMCW-LiDAR-Sensors zur Abstandsmessung in einer virtuellen Testumgebung, insbesondere zum Testen von Software für mobile Roboter und/oder für Flurförderfahrzeuge, wobei:

ein Simulationsmodell definiert wird, wobei das Simulationsmodell einen virtuellen Sensor und die virtuelle Testumgebung umfasst, wobei bei dem Verfahren:

- ein von dem virtuellen Sensor entsendetes virtuelles Sendesignal, insbesondere mittels Raytracing, in der virtuellen Testumgebung simuliert wird;
- festgestellt wird, ob das virtuelle Sendesignal an einem Auftreffpunkt auf ein virtuelles Objekt in der virtuellen Testumgebung trifft;
- bei einer positiven Feststellung eine von dem virtuellen Sensor bis zu dem Auftreffpunkt zurückgelegte Distanz des virtuellen Sendesignals in der virtuellen Testumgebung berechnet wird; und
- zumindest ein Ausgabewert des virtuellen Sensors basierend auf der berechneten Distanz ermittelt wird,

wobei die Ermittlung des Ausgabewerts ferner basierend auf zumindest einem Parameter des Simulationsmodells erfolgt, wobei der Parameter und/oder der Ausgabewert durch eine probabilistische Verteilung modelliert werden, wobei der Parameter einen Azimutwinkel des virtuellen Sendesignals und/oder einen Höhenwinkel des virtuellen Sendesignals umfasst, wobei das virtuelle Sendesignal, insbesondere nur, basierend auf dem Azimutwinkel, dem Höhenwinkel und einem Ausgangspunkt des virtuellen Sendesignals simuliert wird.

Das Verfahren umfasst ferner, dass:

- der Azimutwinkel und Höhenwinkel des virtuellen Sendesignals durch eine probabilistische Verteilung mit einem vordefinierten Referenzazimutwinkel und einem vordefinierten Referenzhöhenwinkel als Erwartungswert modelliert werden;

- eine Vielzahl von unterschiedlichen virtuellen Hilfssendesignalen, deren Azimutwinkel und Höhenwinkel sich vom Referenzazimutwinkel und Referenzhöhenwinkel unterscheiden, basierend auf der probabilistischen Verteilung des virtuellen Sendesignals ausgewählt werden;

- für jedes virtuelle Hilfssendesignal festgestellt wird, ob das virtuelle Hilfssendesignal an dem Auftreffpunkt auf das virtuelle Objekt und/oder an wenigstens einem weiteren Auftreffpunkt auf wenigstens ein weiteres virtuelles Objekt trifft;

- bei einer positiven Feststellung eine von dem virtuellen Sensor bis zu dem Auftreffpunkt zurückgelegte Distanz des virtuellen Hilfssendesignals in der virtuellen Testumgebung berechnet wird; und

- basierend auf der Vielzahl von berechneten Distanzwerten ein finaler Distanzwert ermittelt wird.

Mit anderen Worten wird ein Sensor in einer virtuellen, insbesondere 2- oder 3-dimensionalen, Welt simuliert, um simulierte Sensordaten, d.h. Ausgabewerte, zu erzeugen, welche durch das Erfassen der virtuellen Welt durch den virtuellen Sensor entstehen. Erfindungsgemäß wird dabei zumindest ein Parameter des Simulationsmodells und/oder der Ausgabewert durch eine probabilistische Verteilung modelliert, d.h. durch eine Wahrscheinlichkeitsverteilung verändert. Durch die Anwendung der probabilistischen Verteilung auf den Parameter und/oder den Ausgabewert, wird eine gewisse "Veränderlichkeit" für den Ausgabewert geschaffen, wodurch die Schwankungen z.B. von Messwerten eines realen Sensors im realen Betrieb nachempfunden werden können.

Bei dem virtuellen Sendesignal handelt es sich insbesondere um eine Abstraktion einer elektromagnetischen Welle. Beispielsweise kann das virtuelle Sendesignal ein virtueller Lichtstrahl oder ein virtueller Sendepuls sein. Alternativ sind aber auch z.B. Schallsignale möglich. Bei dem simulierten Sensor kann es sich also z.B. um einen optischen Sensor (wie den oben erwähnten "Frequency-Modulated Continuous Wave Light Detection and Ranging" (FMCW-LiDAR)-Sensor), einen Radar-Sensor oder um einen Ultraschall-Sensor handeln.

Durch die Anwendung der probabilistischen Verteilung wird dabei der Vorteil erzielt, dass sehr viele physikalische Effekte (z.B. die genaue Rückstrahlcharakteristik des vom Sensor ausgesandten Sendesignals an nicht-homogenen Oberflächen oder das Verhalten des Sendesignals bei Regen) nicht simuliert werden müssen, da diese Effekte kumuliert in die probabilistische Verteilung eingehen können. Die probabilistische Verteilung ist dabei mit deutlich geringerem Rechenaufwand auf den Parameter und/oder den Ausgabewert anzuwenden, wodurch eine deutliche Einsparung von Rechenleistung und/oder Rechenzeit erzielt wird.

Wie bereits beschrieben, wird das simulierte virtuelle Sendesignal in dem Simulationsmodell insbesondere mittels eines Raytracing-Verfahrens simuliert, bei dem der Weg der virtuellen Sendesignale, insbesondere nur, vom virtuellen Sensor bzw. eines Ausgangspunkts hin zum Auftreffpunkt des virtuellen Sendesignal auf dem Objekt berücksichtigt wird.

Darüber hinaus kann eine Reflektion des virtuellen Sendesignals am Auftreffpunkt auf die gleiche Weise simuliert werden. Hierbei wird ausgehend vom Auftreffpunkt ein weiteres virtuelles Sendesignal ausgesendet, welches bis zu einem weiteren Auftreffpunkt simuliert wird. Dies kann rekursiv erfolgen und somit eine beliebige Anzahl von Reflektionen berücksichtigt werden.

Darüber hinaus können zur Simulation von Multi-Echo Effekten mehrere Auftreffpunkte entlang eines virtuellen Sendesignals in der virtuellen Testumgebung ausgehend vom Sensor bzw. eines Ausgangspunktes betrachtet werden. Beispielsweise kann ein virtuelles Sendesignal entlang seiner Strahlrichtung mehrere Auftreffpunkte auf jeweils unterschiedlichen virtuellen Objekten aufweisen. Für jeden Auftreffpunkt kann dann die zurückgelegte Distanz berechnet werden, wobei für jeden Auftreffpunkt ein Ausgabewert des virtuellen Sensors basierend auf der Distanz berechnet wird, wobei die Ermittlung des jeweiligen Ausgabewerts ferner basierend auf zumindest einem Parameter des Simulationsmodells erfolgt, wobei der Parameter und/oder der Ausgabewert durch eine probabilistische Verteilung modelliert werden. Hierdurch können Effekte, wie sie z.B. bei transparenten Materialien auftreten, bei der Berechnung der Ausgabewerte berücksichtigt werden. Beispielsweise kann ein Auftreffpunkt auf einer Glasscheibe und zugleich ein Auftreffpunkt auf einem dahinterliegenden Objekt simuliert werden.

Insbesondere wird der Rückweg solcher virtuellen Sendesignale nach einem Auftreffen auf ein virtuelles Objekt nicht berücksichtigt oder ermittelt. Vielmehr wird auf eine vollumfassende Simulation derartiger virtueller Sendesignale, insbesondere des Verhaltens der virtuellen Sendesignale nach dem Auftreffen auf dem virtuellen Objekt, verzichtet, so dass Rechenaufwand gespart wird und die Simulation weiter beschleunigt wird. In der Simulation wird davon ausgegangen, dass ein Sendesignal, das auf ein Objekt trifft, auch wieder zum Sensor zurück gelangt. Eventuelle Schwächungen oder Störungen des rücklaufenden Sendesignals werden bevorzugt aber nicht simuliert, sondern pauschal durch die probabilistische Verteilung modelliert bzw. in den Ausgabewert eingebracht.

Bevorzugt wird auf die Simulation von Sensorparametern wie beispielsweise die Simulation einer elektromagnetischen Welle mit den entsprechenden Eigenschaften, wie z.B. die Modulation der Wellenlänge, verzichtet. Anders ausgedrückt wird das Simulationsmodell, insbesondere nur, basierend auf Top-Level-Informationen, wie beispielsweise der Strahlrichtung des virtuellen Sendesignals und des Auftreffpunkts, erzeugt. Wie oben schon erwähnt, wird das virtuelle Sendesignal somit vereinfacht simuliert. Das Simulationsmodell kann unter anderem ein Sensormodell umfassen, welches z.B. physikalische Parameter eines realen Sensors in dem Simulationsmodell abbildet, beispielsweise eine Drehung eines Spiegels bei einem Laserscanner. Der Drehwinkel des Spiegels kann dadurch zu einem Parameter des Simulationsmodells werden.

Ist der Auftreffpunkt des virtuellen Sendesignals bekannt, so kann basierend auf den Informationen zu der Position des Auftreffpunkts und der Position des Sensors die Distanz vom Sensor zum Auftreffpunkt z.B. basierend auf den entsprechenden Koordinaten berechnet werden. Beispielsweise kann ein Ortsvektor von dem Sensor zum Auftreffpunkt ermittelt werden, dessen Länge die Distanz zwischen dem virtuellen Sensor und dem Auftreffpunkt bzw. dem virtuellen Objekt darstellt. Es versteht sich, dass die zurückgelegte Distanz nicht notwendigerweise explizit berechnet werden muss, auch implizite Ermittlungen der zurückgelegten Distanz sind möglich.

Wie oben schon angedeutet, spielen in der realen Welt bei der Ermittlung der Distanz zu einem Objekt bzw. einem Auftreffpunkt eines Objekts, d.h. wenn ein realer Distanzsensor eine Distanz zu einem realen Objekt erfasst, in der Regel eine Vielzahl von weiteren, insbesondere externen, Faktoren eine Rolle, welche zum Teil bereits vorstehend erwähnt wurden. Die Eigenschaften des entsendeten Lichts, die Wetterbedingungen oder die Reflexionseigenschaften des Materials der Objekte sind nur einige von vielen solcher Faktoren. Da die Berücksichtigung derartiger Faktoren bei der Simulation den Rechenaufwand erhöhen, werden derartige Faktoren bei dem erfindungsgemäßen Simulationsmodell bei der Ermittlung des Ausgabewerts des virtuellen Sensors bevorzugt nicht mit eingebunden.

Vielmehr werden ein oder mehrere Parameter des erfindungsgemäßen Simulationsmodells und/oder ein oder mehrere Ausgabewerte des virtuellen Sensors durch eine probabilistische Verteilung modelliert, welche den Einfluss der vorstehend genannten Faktoren auf den Ausgabewert des virtuellen Sensors indirekt modellieren. Eine Simulation der vorstehend genannten Faktoren ist demnach nicht notwendig. Vielmehr wird durch die Verwendung der probabilistischen Verteilung der Rechenaufwand für das Simulationsmodell reduziert und gleichzeitig ein möglichst genaues und realistisches Simulationsmodell bereitgestellt. Die Parameter des Simulationsmodells können alle Parameter umfassen, welche bei der Berechnung der Ausgabewerte verwendet werden. Beispielsweise können die Parameter des Simulationsmodells Eigenschaften des virtuellen Sendesignals und/oder Eigenschaften des virtuellen Objekts umfassen, z.B. dessen Form, Größe und/oder Position.

Erfindungsgemäß erfolgt ferner die Ermittlung des Ausgabewerts basierend auf zumindest einem Parameter des Simulationsmodells, wobei der Parameter und/oder der Ausgabewert durch eine probabilistische Verteilung modelliert werden. Der Ausgabewert kann dabei (zumindest ungefähr) einem Messwert entsprechen, welchen ein realer Sensor in der simulierten Situation ausgegeben hätte. Bei dem Ausgabewert kann es sich z.B. um einen Distanzwert, einen Geschwindigkeitsvektor, einen Geschwindigkeitswert, z.B. einen Radialgeschwindigkeitswert, einen Intensitätswert und/oder dergleichen handeln.

Insbesondere kann basierend auf der probabilistischen Verteilung des Ausgabewerts eine Vielzahl von verschiedenen Ausgabewerten ausgegeben werden. Beispielsweise können, insbesondere zufällig oder gewichtet nach ihrer Wahrscheinlichkeitsverteilung, Ausgabewerte aus der probabilistischen Verteilung ausgewählt werden, deren durch die probabilistische Verteilung zugeordnete Wahrscheinlichkeit des Auftretens bevorzugt höher als ein vordefinierter Schwellenwert ist. Die verschiedenen Ausgabewerte können je nach Anwendungsfall insbesondere nacheinander oder gemeinsam ausgegeben werden.

Neben der bereits vorstehend erwähnten Vorteile hat die Erfindung den weiteren Vorteil, dass durch die Simulation des Sensors der Aufwand für die Generierung von Sensordaten reduziert wird und somit eine große Menge an Daten in kurzer Zeit erzeugt werden kann. Folglich sinkt auch der Aufwand sowie die Zeit zum Testen von Algorithmen oder Applikationen, welche unter Verwendung der Sensordaten betrieben werden. Ferner kann die virtuelle Testumgebung beliebig verändert werden und eine Vielzahl an unterschiedlichen sowie speziellen Szenarien simuliert werden, sodass die Sensordaten ein vielseitiges Spektrum an Szenarien, insbesondere im industriellen Umfeld, beispielsweise beim Betrieb von mobilen Robotern und/oder Flurförderfahrzeugen, abbilden können.

Weitere Ausführungsformen der Erfindung sind der Beschreibung, den Unteransprüchen sowie den Zeichnungen zu entnehmen.

Gemäß einer ersten Ausführungsform wird durch die probabilistische Verteilung Rauschen in dem Ausgabewert erzeugt. Genauer gesagt führt das Rauschen dazu, dass der Ausgabewert (z.B. bei Ausgabe mehrere zeitlich beabstandeter Ausgabewerte) schwankt. Dieses Rauschen simuliert also die Effekte in der realen Welt, die zu Schwankungen in echten Messwerten führen würden.

Die probabilistische Verteilung kann also mechanische Ungenauigkeiten des (realen) Sensors (z.B. Winkelrauschen einer Strahlablenkung), Messungenauigkeiten des (realen) Sensors (z.B. Abstandsrauschen oder allgemein Messrauschen) und dergleichen repräsentieren.

Gemäß einer weiteren Ausführungsform umfasst die probabilistische Verteilung eine Normalverteilung. Die Modellierung eines Parameters kann somit beispielsweise durch die Festlegung eines Erwartungswerts und eines Werts für die Standardabweichung erfolgen.

Als Erwartungswert kann ein Wert verwendet werden, welcher als Idealwert bzw. als Referenzwert angenommen wird. Im Falle eines virtuellen Sendesignals kann, wie vorstehend ausgeführt, eine Idealrichtung bzw. Referenzrichtung der Normalverteilung als Erwartungswert zugrunde gelegt werden. Im Falle eines normalverteilten Distanzwerts kann beispielsweise ein durch das Simulationsmodell ermittelter Distanzwert als Erwartungswert verwendet werden. Entsprechendes gilt für die ermittelte Radialgeschwindigkeit. Die Standardabweichung der Normalverteilung kann dabei den Grad des Rauschens festlegen. Die Standardabweichung kann beispielsweise sensorspezifisch vorab festgelegt werden oder selbst eine Funktion weiterer Simulationsparameter sein, wie beispielsweise dem Distanzwert oder dem Reflexionswert des getroffenen Objekts.

Alternativ zur Normalverteilung kann auch z.B. eine logarithmische Normalverteilung, eine Exponentialverteilung oder eine andere Wahrscheinlichkeitsverteilung verwendet werden.

Gemäß einer weiteren Ausführungsform umfasst der Ausgabewert einen ermittelten Distanzwert zu dem virtuellen Objekt beziehungsweise zum Auftreffpunkt des virtuellen Sendesignals auf dem virtuellen Objekt und/oder eine ermittelte Radialgeschwindigkeit des Auftreffpunktes des virtuellen Sendesignals auf dem virtuellen Objekt in Bezug auf den virtuellen Sensor. Der Ausgabewert kann beispielsweise ein zu einem Messwert eines realen Sensors vergleichbarer Wert sein. Insbesondere wird der ermittelte Distanzwert und/oder die ermittelte Radialgeschwindigkeit durch die probabilistische Verteilung modelliert. Der ermittelte (ideale) Distanzwert und/oder die ermittelte (ideale) Radialgeschwindigkeit werden somit mit einem Rauschen beaufschlagt, um eine Ungenauigkeit des Ausgabewertes zu berücksichtigen. Der ermittelte Distanzwert und/oder die ermittelte Radialgeschwindigkeit können beispielsweise durch eine Berechnung unter Verwendung des Auftreffpunkts des virtuellen Sendesignals auf dem virtuellen Objekt ermittelt werden. Insbesondere können für die Berechnung nur geometrische Daten aus der Testumgebung verwendet werden.

Ferner umfasst der Parameter einen Azimutwinkel des virtuellen Sendesignals und/oder einen Höhenwinkel des virtuellen Sendesignals.

Ferner wird das virtuelle Sendesignal, insbesondere nur, basierend auf dem Azimutwinkel, dem Höhenwinkel und einem Ausgangspunkt des virtuellen Sendesignals simuliert.

Beispielsweise geben der Azimutwinkel und der Höhenwinkel des virtuellen Sendesignals gemeinsam mit dem Ausgangspunkt eine, insbesondere eindeutige, Strahlrichtung des virtuellen Sendesignals an. Der Ausgangpunkt definiert beispielsweise einen eindeutigen Punkt in der virtuellen Testumgebung, von dem ausgehend das virtuelle Sendesignal entsendet wird. Beispielsweise kann der Ausgangspunkt sich mit einer Position des virtuellen Sensors überschneiden. Der Azimutwinkel bzw. Horizontalwinkel gibt den Winkel des virtuellen Sendesignals bezüglich einer Referenzrichtung in einer Horizontalebene an, während der Höhenwinkel bzw. Vertikalwinkel den Winkel des virtuellen Sendesignals bezüglich einer Referenzrichtung in einer Vertikalebene beschreibt.

Insbesondere kann der Azimutwinkel und/oder Höhenwinkel durch eine probabilistische Verteilung modelliert werden. Beispielsweise kann durch die probabilistische Verteilung des Azimut- und/oder Höhenwinkels eine Abweichung des virtuellen Sendesignals von einer beabsichtigten Strahlrichtung, d.h. von einer Referenzstrahlrichtung, welche einen Referenzazimutwinkel und/oder eine Referenzhöhenwinkel umfassen kann, erzielt werden. Diese Abweichung kann z.B. der mechanischen Ungenauigkeit beim Aussenden eines Sendesignals durch einen realen Sensor entsprechen.

Beispielsweise kann die probabilistische Verteilung des Azimutwinkels und/oder Höhenwinkels basierend auf der Referenzstrahlrichtung ermittelt werden, indem die Referenzstrahlrichtung bzw. der Referenzazimutwinkel und/oder Referenzhöhenwinkel der probabilistischen Verteilung als Erwartungswert(e) zugrunde gelegt werden.

Bevorzugt kann die probabilistische Verteilung des Azimutwinkels und/oder Höhenwinkels in die Berechnung des Ausgabewerts eingehen. Dazu kann nach der Veränderung des Azimutwinkels und/oder des Höhenwinkels der Auftreffpunkt des virtuellen Sendesignals für die veränderten Winkel ermittelt werden. Dadurch kann dann z.B. die berechnete Distanz anders sein, als bei unveränderten Winkeln. Insbesondere werden nacheinander Datentupel, die einen im Vergleich zum Referenzazimutwinkel veränderten Azimutwinkel und einen im Vergleich zum Referenzhöhenwinkel veränderten Höhenwinkel umfassen, basierend auf der probabilistischen Verteilung des Azimutwinkels und Höhenwinkels erzeugt, um entsprechende Auftreffpunkte in der virtuellen Testumgebung zu berechnen. Auf diese Weise geht die probabilistische Verteilung in den Ausgabewert ein.

Gemäß einer weiteren Ausführungsform werden basierend auf der probabilistischen Verteilung des Parameters und/oder des Ausgabewerts nacheinander eine Vielzahl an Zufallswerten für den Parameter und/oder den Ausgabewert erzeugt, welche für die Ermittlung des Ausgabewerts verwendet werden, wobei ein Zufallswert abhängig von einem zuvor erzeugten Zufallswert erzeugt wird. Die Erzeugung der Zufallswerte kann basierend auf vordefinierten bzw. vorgegebenen Regeln, beispielsweise durch Einführung additiver bedingter Wahrscheinlichkeitsverteilungen erfolgen. Eine additive bedingte Wahrscheinlichkeitsverteilung ist beispielsweise dadurch gekennzeichnet, dass die Wahrscheinlichkeitsverteilung einer Zufallsvariable abhängig von der Wahrscheinlichkeitsverteilung einer anderen Zufallsvariable ist. Insbesondere kann die Wahrscheinlichkeitsverteilung der Zufallsvariable "Erzeugen eines Zufallswerts zum Zeitpunkt t" abhängig von der Wahrscheinlichkeitsverteilung der Zufallsvariable "Erzeugen eines Zufallswerts zum Zeitpunkt t-1" sein. Die Erzeugung eines Zufallswerts kann also abhängig von einem zuvor erzeugten Zufallswert erfolgen. Beispielsweise können nacheinander die zuvor beschriebenen Datentupel erzeugt werden, wobei die Erzeugung basierend auf vordefinierten Regeln erfolgen kann. Insbesondere können die vordefinierten Regeln eine Bewegung des virtuellen Sensors berücksichtigen bzw. abbilden. Hierdurch wird es beispielsweise möglich, den zeitabhängigen Ausschlagwinkel oder Jitter eines Scannerspiegels oder die Schwingung des Sensors beziehungsweise einer Halterung des Scanners aufgrund von Umwelteinflüssen wie beispielsweise Wind zu modellieren. Darüber hinaus kann der reale zeitliche Verlauf solcher Parameter durch Experimente identifiziert und direkt in der Simulation verwendet werden.

Ferner umfasst die Berechnung der von dem virtuellen Sensor bis zum Auftreffpunkt auf dem virtuellen Objekt zurückgelegten Distanz des virtuellen Sendesignals in der virtuellen Testumgebung ferner, dass:

- der Azimutwinkel und Höhenwinkel des virtuellen Sendesignals durch eine probabilistische Verteilung mit einem vordefinierten Referenzazimutwinkel und einem vordefinierten Referenzhöhenwinkel als Erwartungswert modelliert werden;
- eine Vielzahl von unterschiedlichen virtuellen Hilfssendesignalen, deren Azimutwinkel und Höhenwinkel sich vom Referenzazimutwinkel und Referenzhöhenwinkel unterscheiden, basierend auf der probabilistischen Verteilung des virtuellen Sendesignals ausgewählt werden;
- für jedes virtuelle Hilfssendesignal festgestellt wird, ob das virtuelle Hilfssendesignal an einem Auftreffpunkt auf das virtuelle Objekt und/oder an wenigstens einem weiteren Auftreffpunkt auf wenigstens ein weiteres virtuelles Objekt trifft; bei einer positiven Feststellung eine von dem virtuellen Sensor bis zu dem Auftreffpunkt zurückgelegte Distanz des virtuellen Hilfssendesignals in der virtuellen Testumgebung berechnet wird; und
- basierend auf der Vielzahl von berechneten Distanzwerten ein finaler Distanzwert ermittelt wird.

Mit anderen Worten wird eine Vielzahl von zusätzlichen virtuellen Hilfssendesignalen unter Verwendung der probabilistischen Verteilung des Azimutwinkels und Höhenwinkel des virtuellen Sendesignals erzeugt. Insbesondere wird eine Anzahl N, beispielsweise 10, 50, 100 oder 200, von virtuellen Hilfssendesignalen erzeugt. Aufgrund der probabilistischen Verteilung werden die virtuellen Hilfssendesignale in unterschiedliche Richtungen ausgesandt. Dabei werden die von diesen Hilfssendesignalen zurückgelegten Distanzen von dem Ausgangspunkt bis hin zum Auftreffpunkt auf dem virtuellen Objekt oder wenigstens einem weiteren Auftreffpunkt auf wenigstens einem weiteren virtuellen Objekt berechnet und in die Berechnung des finalen Distanzwerts mit eingebracht, wie nachfolgend noch genauer ausgeführt wird. Aufgrund der unterschiedlichen Richtungen der Hilfssendesignale unterscheiden sich üblicherweise auch die Distanzwerte, insbesondere können unterschiedliche virtuelle Objekte getroffen werden.

Gemäß einer weiteren Ausführungsform wird der finale Distanzwert dadurch ermittelt, dass:

- eine vordefinierte Anzahl an Bins gleicher Größe für einen vordefinierten Distanzbereich initialisiert wird, wobei jedes Bin einem unterschiedlichen Teilbereich innerhalb des vordefinierten Distanzbereichs zugeordnet ist;
- für jedes Hilfssendesignal ermittelt wird, ob das entsprechende virtuelle Sendesignal mit dem virtuellen Objekt und/oder dem wenigstens einen weiteren virtuellen Objekt in der virtuellen Testumgebung, insbesondere in dem vordefinierten Distanzbereich, einen jeweiligen Auftreffpunkt aufweist und bei einer positiven Ermittlung ein zugehöriger Distanzwert vom Ausgangspunkt zu dem jeweiligen Auftreffpunkt ermittelt wird, wobei jeder Distanzwert einem entsprechenden Bin zugeordnet wird;
- ein durchschnittlicher Distanzwert basierend auf den Distanzwerten berechnet wird, die dem Bin zugehörig sind, welches die höchste Anzahl an zugeordneten Distanzwerten aufweist;
- der finale Distanzwert mittels einer probabilistischen Verteilung basierend auf dem durchschnittlichen Distanzwert modelliert wird und als Ausgabewert festgelegt wird.

Anders ausgedrückt wird ein vordefinierter Distanzbereich definiert, beispielsweise ein spezifischer Messbereich des Sensors, welcher durch einen minimalen Distanzwert und einen maximalen Distanzwert festgelegt werden kann, wobei der vordefinierte Distanzbereich in unterschiedliche Bins aufgeteilt wird. Jedes Bin stellt dabei beispielsweise einen Teilbereich innerhalb des vordefinierten Distanzbereichs dar und kann durch einen minimalen und maximalen Distanzwert festgelegt werden. Anschließend wird jeder ermittelte Distanzwert einem Bin zugeordnet, indem festgestellt wird, ob der ermittelte Distanzwert des entsprechenden Hilfssendesignals in dem Teilbereich des endsprechenden Bins liegt. Ermittelte Distanzwerte, die keinem Bin zugeordnet werden können, können beispielsweise unbeachtet bleiben. Nachdem die Zuordnung der ermittelten Distanzwerte beendet ist, wird beispielsweise das Bin mit den meisten zugeordneten Distanzwerten ausgewählt und die diesem Bin zugeordneten Distanzwerte gemittelt, um den durchschnittlichen Distanzwert zu erhalten. Der finale Distanzwert kann anschließend mittels einer probabilistischen Verteilung basierend auf dem durchschnittlichen Distanzwert modelliert werden und als Ausgabewert ausgegeben werden.

Beispielsweise kann der durchschnittliche Distanzwert als Erwartungswert verwendet werden und die Standardabweichung der probabilistischen Verteilung basierend auf den ausgehend von den Hilfssendesignalen ermittelten Distanzwerten bestimmt werden.

Beispielsweise wird ein Index i des Bins, dem ein berechneter Distanzwert $d_{ray}$ eines Hilfssendesignals zugehörig ist, wie folgt berechnet:

$$i = \frac{d_{ray} - d_{min}}{d_{max} - d_{min}} \times (k-1)$$

wobei i den Index des Bins, dem der berechnete Distanzwert $d_{ray}$ zugeordnet wird, $d_{min}$ und $d_{max}$ eine minimale Distanz und eine maximale Distanz des vordefinierten Distanzbereichs und k die vordefinierte Anzahl der Bins darstellt. Beispielsweise kann der vordefinierte Distanzbereich zwischen 20 und 30m, 40m und 50m, 70 und 100m oder 130 und 150m liegen. Ferner kann die Anzahl k der Bins beliebig festgelegt werden. Beispielsweise kann die Anzahl der Bins 8, 16, 32, 64, 128, 256, 512, 1024 oder 2048 betragen.

Gemäß einer weiteren Ausführungsform umfasst die Ermittlung der Radialgeschwindigkeit des Auftreffpunkts des virtuellen Sendesignals auf dem virtuellen Objekt in Bezug auf den virtuellen Sensor, dass:

- ein Auftreffpunkt i des virtuellen Sendesignals auf dem virtuellen Objekt zu einem Zeitpunkt *t* ermittelt wird, wobei die Position des Auftreffpunkts $v_{hit}(t)$ auf dem virtuellen Objekt in der dreidimensionalen, virtuellen Testumgebung ermittelt wird;
- zu einem Zeitpunkt t + $\Delta$t, die aktuelle Position des Auftreffpunktes $v_{hit}(t + \Delta t)$ auf dem virtuellen Objekt in der dreidimensionalen, virtuellen Testumgebung ermittelt wird; und
- zu einem Zeitpunkt t + $\Delta$t basierend auf den zwei zeitlich aufeinanderfolgenden Positionen des Auftreffpunkts $v_{hit}(t)$ und $v_{hit}(t + \Delta t)$ der dreidimensionale Geschwindigkeitsvektor des Auftreffpunkts bestimmt wird und durch Projektion auf die Richtung des gesendeten virtuellen Sendesignals zum Zeitpunkt t in der virtuellen Testumgebung die Radialgeschwindigkeit des Auftreffpunkts in Bezug auf den Sensor ermittelt wird.

Insbesondere wird für die Ermittlung des Auftreffpunkts ein Gitter bzw. Mesh gebildet, das beispielsweise eine Vielzahl von Dreiecken, Rechtecken und/oder einer anderen geometrischen Form aufweist. Insbesondere kann das virtuelle Objekt durch ein entsprechendes Gitter dargestellt oder vereinfacht werden. Insbesondere kann das Gitter durch die Koordinaten der Eckpunkte des Gitters definiert werden. Ferner kann die Position des Auftreffpunkts innerhalb des Gitters, insbesondere mit Bezug auf Eckpunkte des Gitters, ermittelt und gespeichert werden.

Um die Geschwindigkeit des Auftreffpunkts nun zu bestimmen, wird die Position des Auftreffpunkts zu einem Zeitpunkt t und zu einem Zeitpunkt t + $\Delta$t bestimmt, sodass eine erste Position, insbesondere ein erster Auftreffvektor, und eine zweite Position, insbesondere ein zweiter Auftreffvektor, des Auftreffpunkts ermittelt werden. Basierend auf der ermittelten ersten und zweiten Position kann eine Distanz zwischen der ersten und zweiten Position ermittelt werden, wobei basierend auf der Distanz zwischen der ersten und zweiten Position und der für das Zurücklegen der entsprechenden Distanz benötigten Zeit $\Delta$t die Geschwindigkeit des Auftreffpunkts des virtuellen Sendesignals auf dem virtuellen Objekt in der virtuellen Testumgebung ermittelt werden kann. Ferner kann basierend auf der ermittelten Geschwindigkeit des Auftreffpunktes und der berechneten Position des Auftreffpunkts zum Zeitpunkt t die Radialgeschwindigkeit des Auftreffpunktes in Bezug auf den Sensor bestimmt werden. Beispielsweise kann der Geschwindigkeitsvektor des Auftreffpunktes auf die Richtung des ersten virtuellen Sendesignals projiziert werden, um die Radialgeschwindigkeit des Auftreffpunktes in Bezug auf den Sensor zu bestimmen.

Besonders vorteilhaft ist hierbei, dass die Ermittlung der Radialgeschwindigkeit durch die Simulation eines, insbesondere einzigen, virtuellen Sendesignals erfolgt, indem der Auftreffpunkt auf dem virtuellen Objekt und insbesondere innerhalb des Gitters zum Zeitpunkt t gemerkt bzw. gespeichert wird und zum Zeitpunkt t + $\Delta$t die Koordinaten des Auftreffpunkt innerhalb des Gitters ermittelt bzw. abgefragt werden. Folglich kann auf eine aufwändige Simulation eines zweiten Sendesignals, welche aufgrund der hohen erforderlichen zeitlichen Auflösung nur schwer und rechenintensiv realisierbar ist, verzichtet werden.

Gemäß einer weiteren Ausführungsform wird basierend auf einer distanzabhängigen Wahrscheinlichkeit eine Validität des Ausgabewerts ermittelt. Beispielsweise wird der Erwartungswert einer Bernoulli-Verteilung distanzabhängig gewählt und so die Validität des ermittelten Distanzwerts und/oder der ermittelten Radialgeschwindigkeit bestimmt.

Des Weiteren können beispielsweise Distanzwerte in einem Validitätsbereich, d.h. einem gültigen Distanzbereich [$r_{min}$, $r_{max}$], als gültige Werte festgelegt werden, während hingegen Distanzwerte außerhalb des Validitätsbereichs als ungültige Werte verworfen oder nicht beachtet werden. Der Validitätsbereich kann beispielsweise sensorspezifisch und/oder basierend auf den virtuellen Objekten zugeschriebenen Eigenschaften festgelegt werden.

Gemäß einer weiteren Ausführungsform werden zur Erstellung der virtuellen Testumgebung physische Sensordaten und/oder physische Positionsdaten eines realen Sensors ausgewertet. In den Aufbau der virtuellen Testumgebung können also z.B. an einem realen Sensor gemessene oder z.B. aus Datenblättern o.ä. entnommene Informationen über den Sensor und/oder dessen Einbauort einfließen. Auf diese Weise wird die Möglichkeit geschaffen, eine reale Situation in der virtuellen Testumgebung zu simulieren.

Gemäß einer weiteren Ausführungsform werden in der virtuellen Testumgebung gewonnene Informationen, insbesondere die Ausgabewerte, dazu verwendet, einen bzw. den realen Sensor für den realen Betrieb zu konfigurieren. Hierzu kann der reale Sensor z.B. über eine Datenverbindung mit einer Simulationseinrichtung gekoppelt werden, um Einstellungen oder Parameter an den realen Sensor zu übertragen.

Es kann sich in der virtuellen Testumgebung z.B. zeigen, dass bestimmte Einstellungen des Sensors für den simulierten Anwendungsfall vorteilhaft sind. Diese Einstellungen können z.B. ein bestimmtes Scan-Pattern (also das Muster der Aussendung von Sendesignalen), vorteilhafte Scan-Frequenzen (d.h. die zeitliche Häufigkeit der Aussendung von Sendesignalen), die Sendeleistung aber auch die genaue Positionierung und/oder Orientierung des Sensors und dergleichen mehr betreffen.

Beispielsweise wird der virtuelle Sensor also in der virtuellen Testumgebung angeordnet, wobei nach der Simulation ein realer Sensor basierend auf Daten des virtuellen Sensors eingestellt wird. Bevorzugt können durch die Simulation des virtuellen Sensors in der virtuellen Testumgebung unterschiedliche Positionen des virtuellen Sensors getestet werden und eine vorteilhafte Positionierung des virtuellen Sensors ermittelt werden. Der reale Sensor kann somit entsprechend der Position des virtuellen Sensors positioniert werden und mit den Positionsdaten des virtuellen Sensors initialisiert bzw. kalibriert werden.

Gemäß einer weiteren Ausführungsform werden basierend auf Daten der virtuellen Testumgebung und/oder Daten des virtuellen Sensors Annotationsdaten, beispielsweise Metadaten oder Daten zu Objekten in der virtuellen Testumgebung, erzeugt. Die Annotationsdaten können beispielsweise auch 3D-Bounding Boxen für Objekte innerhalb von Punktwolken umfassen. Besonders vorteilhaft ist hierbei, dass die Erzeugung der Annotationsdaten nicht mit zusätzlichem Rechenaufwand verbunden ist, da entsprechende Annotationsdaten bereits durch die Testumgebung bereitgestellt werden. Die Annotationsdaten können beispielsweise angeben, ob ein vom virtuellen Sendesignal getroffenes Objekt z.B. ein Mensch, ein Fahrzeug, der Boden oder ein Gebäude ist.

Gemäß einer weiteren Ausführungsform werden mittels der durch das Simulationsmodell erzeugten Daten und/oder der Annotationsdaten KI-Modelle für mobile Roboter und/oder für Flurförderfahrzeuge trainiert. Beispielsweise können die KI-Modelle online, d.h. durch in Echtzeit erzeugte Daten, und/oder offline, d.h. durch bereits vorhandene bzw. in der Vergangenheit erzeugte Daten, trainiert werden. Beim Trainieren eines KI-Modells kann von besonderem Vorteil sein, wenn Annotationsdaten vorliegen, weil dann auch überprüft werden kann, ob das KI-Modell z.B. einen Menschen korrekt als solchen erkennt.

Gemäß einer weiteren Ausführungsform werden eine Vielzahl von bis zu einer vordefinierten Messzeit ausgesendeten virtuellen Sendesignalen gemeinsam verarbeitet. Es wird somit eine Momentaufnahme einer aktuellen Szene in der virtuellen Testumgebung erzeugt.

Gemäß einer weiteren Ausführungsform werden eine Vielzahl von bis zu einer vordefinierten Messzeit ausgesendeten virtuellen Sendesignalen in eine vordefinierte Anzahl an Subsets, welche jeweils einer gleichen Zeitdauer entsprechen, eingeteilt, wobei die einem Subset zugehörigen virtuellen Sendesignale gemeinsam verarbeitet werden. Somit wird eine aktuelle Szene der virtuellen Testumgebung gescannt.

Weiterer Gegenstand der Erfindung ist ein System zur Modellierung eines Sensors, insbesondere eines FMCW-LiDAR-Sensors, in einer virtuellen Testumgebung, insbesondere zum Testen von Software für mobile Roboter und/oder für Flurförderfahrzeuge, umfassend einen Computer, die dazu ausgebildet ist:

- ein Simulationsmodell zu definieren, wobei das Simulationsmodell einen virtuellen Sensor und die virtuelle Testumgebung umfasst,
- ein von dem virtuellen Sensor entsendetes virtuelles Sendesignal in der virtuellen Testumgebung zu simulieren;
- festzustellen, ob das virtuelle Sendesignal an einem Auftreffpunkt auf ein virtuelles Objekt in der virtuellen Testumgebung trifft;
- bei einer positiven Feststellung eine von dem virtuellen Sensor bis zu dem Auftreffpunkt auf dem virtuellen Objekt zurückgelegte Distanz des virtuellen Sendesignals in der virtuellen Testumgebung zu berechnen; und
- zumindest ein Ausgabewert des virtuellen Sensors basierend auf der berechneten Distanz zu ermitteln,

wobei die Ermittlung des Ausgabewerts ferner basierend auf zumindest einem Parameter des Simulationsmodells erfolgt, wobei der Parameter und/oder der Ausgabewert durch eine probabilistische Verteilung modelliert werden, wobei der Parameter einen Azimutwinkel des virtuellen Sendesignals und/oder einen Höhenwinkel des virtuellen Sendesignals umfasst, wobei das virtuelle Sendesignal, insbesondere nur, basierend auf dem Azimutwinkel, dem Höhenwinkel und einem Ausgangspunkt des virtuellen Sendesignals simuliert wird.

Der Computer ist ferner dazu ausgebildet:

- den Azimutwinkel und Höhenwinkel des virtuellen Sendesignals durch eine probabilistische Verteilung mit einem vordefinierten Referenzazimutwinkel und einem vordefinierten Referenzhöhenwinkel als Erwartungswert zu modellieren;
- eine Vielzahl von unterschiedlichen virtuellen Hilfssendesignalen, deren Azimutwinkel und Höhenwinkel sich vom Referenzazimutwinkel und Referenzhöhenwinkel unterscheiden, basierend auf der probabilistischen Verteilung des virtuellen Sendesignals auszuwählen;

- für jedes virtuelle Hilfssendesignal festzustellen, ob das virtuelle Hilfssendesignal an dem Auftreffpunkt auf das virtuelle Objekt und/oder an wenigstens einem weiteren Auftreffpunkt auf wenigstens ein weiteres virtuelles Objekt trifft;
- bei einer positiven Feststellung eine von dem virtuellen Sensor bis zu dem Auftreffpunkt zurückgelegte Distanz des virtuellen Hilfssendesignals in der virtuellen Testumgebung zu berechnen; und
- basierend auf der Vielzahl von berechneten Distanzwerten einen finalen Distanzwert zu ermitteln.

Insbesondere kann das System zur Überwachung von Fahrzeugen und Fußgängern, beispielsweise im urbanen Raum, Erfassung von Containern, Erfassung von Produktionsumgebungen, insbesondere (mobilen) Robotern, fahrerlosen Transportfahrzeugen, Fabrikautomation oder Logistik eingesetzt werden.

Gemäß einer weiteren Ausführungsform wird Raytracing-spezifische Hardware für die Simulation der virtuellen Sendesignale verwendet (beispielsweise eine Grafikkarte) und/oder die virtuelle Testumgebung wird mittels einer Game Engine simuliert. Vorteilhafterweise kann dadurch die Simulation beschleunigt werden.

Für das System gelten die Ausführungen zu dem erfindungsgemäßen Verfahren entsprechend, dies gilt insbesondere hinsichtlich Vorteilen und Ausführungsformen.

Ferner ist, soweit nicht anders angegeben, jede Kombination der vorstehenden Ausführungsformen möglich.

Nachfolgend wird die Erfindung rein beispielhaft unter Bezugnahme auf die Zeichnungen dargestellt. Es zeigen:

Fig. 1       eine virtuelle Testumgebung;

Fig. 2       ein Verfahren zur Modellierung eines Sensors in der virtuellen Testumgebung;

Fig. 3a      eine Menge an virtuellen Lichtstrahlen umfassend einen Referenzlichtstrahl und eine Vielzahl von Hilfslichtstrahlen;

Fig. 3b      ein Diagramm des Azimut- und Höhenwinkelrauschens für eine Standardabweichung von $\sigma_{Azimut} = 0.326°$ und $\sigma_{Höhen} = 0.275°$ mit 5000 Datenpunkten;

Fig. 3c      ein Diagramm des Azimut- und Höhenwinkelrauschens für eine Standardabweichung von $\sigma_{Azimut} = 0.326°$ und $\sigma_{Höhen} = 0.275°$ mit 100 Datenpunkten;

Fig. 4a      eine 2-dimensionale Ansicht eines virtuellen Lichtstrahlkegels in der virtuellen Testumgebung mit 2 virtuellen Objekten;

Fig. 4b      ein Histogramm von ermittelten Distanzwerten in einem vordefinierten Distanzbereich;

Fig. 5       eine Bewegung eines virtuellen Objekts in der virtuellen Testumgebung;

Fig. 6       eine Veranschaulichung zweier Datenverarbeitungsvarianten.

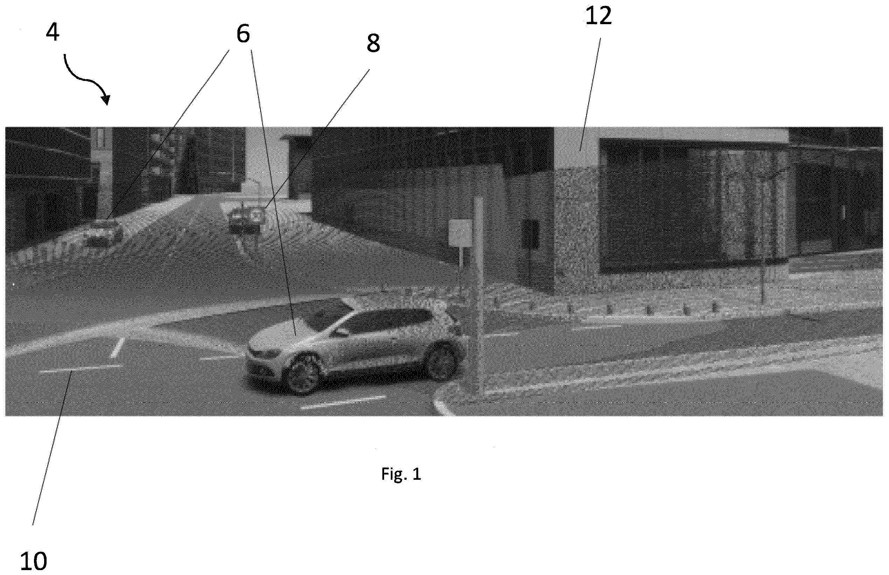

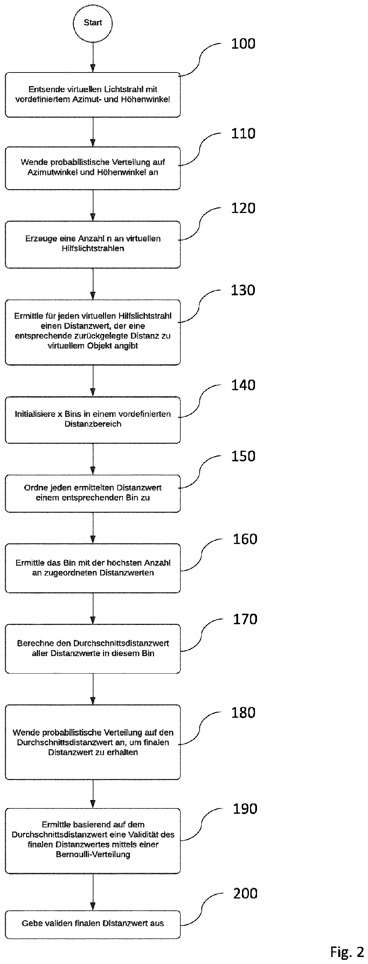

Fig. 1 zeigt eine beispielhafte virtuelle Testumgebung 4, d.h. eine virtuelle 3-dimensionale Welt, welche mittels eines nicht gezeigten virtuellen Sensors, welcher Teil der virtuellen Testumgebung ist, gemäß dem in Fig. 2 gezeigten Verfahren erfasst wird, wobei die virtuelle Testumgebung 4 eine Vielzahl virtueller Objekte wie beispielsweise virtuelle Fahrzeuge 6, virtuelle Straßeninfrastruktur, Straßenschilder 8, Straßenmarkierungen 10, Fußgängerwege, und virtuelle Gebäude 12 umfasst. Grundsätzlich kann die virtuelle Testumgebung 4 alle möglichen, insbesondere andere als die hier gezeigten, Objekte umfassen, beispielsweise Menschen, Tiere, etc. Die Testumgebung bildet insbesondere ein realistisches Fahrszenario der realen Welt nach und kann beliebig angepasst werden. Die Testumgebung wird auf einem (nicht gezeigten) Computer einer Simulationseinrichtung simuliert.

Fig. 2 zeigt ein Verfahren 2 zur Modellierung eines Sensors in der virtuellen Testumgebung 4, wobei bei dem Verfahren 2 ein Simulationsmodell definiert wird, wobei das Simulationsmodell einen virtuellen Sensor, insbesondere einen virtuellen Distanzsensor, und die virtuelle Testumgebung 4 umfasst. Der virtuelle Distanzsensor ist insbesondere in der virtuellen Testumgebung 4 angeordnet. Die virtuelle Testumgebung 4 ist eine virtuelle 3-dimensionale Welt, die eine virtuelle Straßeninfrastruktur, d.h. virtuelle Straßen, Straßenschilder 8, Straßenmarkierungen 10, etc., sowie virtuelle Objekte wie beispielsweise virtuelle Menschen, Tiere, Fahrzeuge, Gebäude, etc, aufweist.

Das Verfahren beginnt im Verfahrensschritt 100 durch ein Entsenden eines virtuellen Sendesignals in Form eines virtuellen Lichtstrahls vom virtuellen Distanzsensor in die virtuelle Testumgebung 4, in der ein virtuelles Objekt lokalisiert ist, wobei der virtuelle Lichtstrahl durch einen vordefinierten Referenzazimutwinkel und Referenzhöhenwinkel sowie einen Ausgangspunkt 14, der beispielsweise durch die Position des virtuellen Sensors in der virtuellen Testumgebung festgelegt ist, aufweist. Da die Strahlrichtung eines entsendeten Lichtstrahls in der realen Welt aufgrund von Störfaktoren von der beabsichtigen Strahlrichtung abweichen kann, wird der Azimutwinkel und der Höhenwinkel des virtuellen Lichtstrahls mit einer Normalverteilung modelliert, welche den Einfluss derartiger Störfaktoren simuliert (Verfahrensschritt 110). Anders ausgedrückt wird die Strahlrichtung des virtuellen Lichtstrahls mit einer Rauschkomponente versehen. Der Referenzazimutwinkel und der Referenzhöhenwinkel des virtuellen Lichtstrahls dienen dabei als Erwartungswert der Normalverteilung, wobei die Standardabweichung durch den Sensortyp vordefiniert ist.

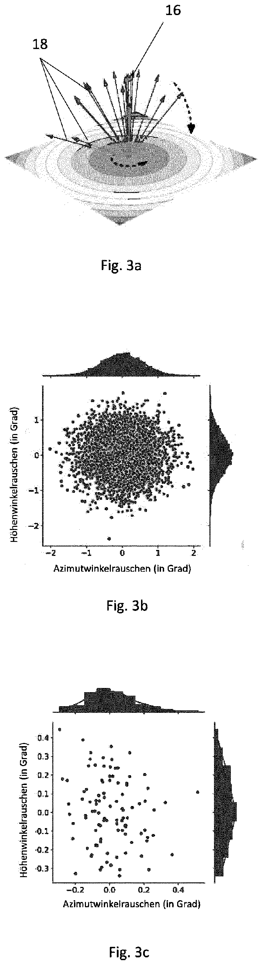

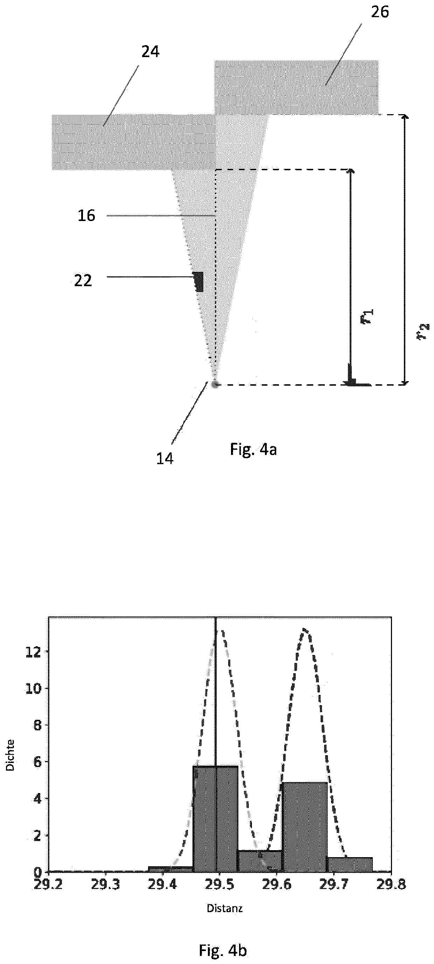

Basierend auf der Normalverteilung des Azimutwinkels und des Höhenwinkels wird im Verfahrensschritt 120 eine Anzahl n, im vorliegen Fall 100, an virtuellen Hilfslichtstrahlen 18 (siehe Fig. 3a) erzeugt, welche von demselben Ausgangspunkt 14 (siehe Fig. 4a) ausgehen und jeweils einen Azimutwinkel und/oder Höhenwinkel aufweisen, welcher der Statistik eines Strahlprofils folgt. Unter Verwendung einer Normalverteilung kann ein Gauß Strahl simuliert werden. Unter Verwendung anderer Wahrscheinlichkeitsverteilungen der Hilfslichtstrahlen können beliebige Strahlprofile modelliert werden. Für jeden virtuellen Hilfslichtstrahl 18 wird anschließend im Verfahrensschritt 130 ein Distanzwert berechnet, der eine entsprechende Distanz zu dem virtuellen Objekt bzw. einem Auftreffpunkt auf dem virtuellen Objekt angibt. Folglich werden 100 Distanzwerte auf diese Weise berechnet. Die Berechnung der Distanzwerte erfolgt mittels Raytracing, d.h. indem ein virtueller Hilfslichtstrahl 18 entlang seiner Strahlrichtung verfolgt wird, wobei ermittelt wird, ob der virtueller Hilfslichtstrahl 18 entlang seiner Strahlrichtung auf ein virtuelles Objekt auftrifft. Dies wird in Fig. 4a noch genauer dargestellt.

Bei einer positiven Feststellung wird der Auftreffpunkt basierend auf den vorliegenden Informationen der Testumgebung, d.h. z.B. der kartesischen Raumkoordinaten, berechnet. Beispielsweise wird der Schnittpunkt des virtuellen Lichtstrahls, d.h. der Halbgeraden die durch den Ausgangspunkt 14 und einem jeweiligen Azimut- und Höhenwinkel definiert ist, mit dem virtuellen Objekt, d.h. den Koordinaten des virtuellen Objekts, und insbesondere mit dem Auftreffpunkt auf dem virtuellen Objekt berechnet.

Nach der Berechnung der den Hilfslichtstrahlen 18 zugehörigen Distanzwerte, wird eine Anzahl von x Bins , in einem vordefinierten Distanzbereich initialisiert (Verfahrensschritt 140), d.h. der vordefinierte Distanzbereich wird in x äquidistante Teilbereiche aufgeteilt.

Anschließend wird im Verfahrensschritt 150 jeder der 100 ermittelten Distanzwerte einem entsprechenden Bin zugeordnet, in dessen Teildistanzbereich der ermittelte Distanzwert liegt. Ermittelte Distanzwerte, die keinem Bin zugeordnet werden können, werden bei der weiteren Berechnung außer Acht gelassen. Es ergibt sich somit ein Histogramm der ermittelten Distanzwerte, welches eine Verteilung der ermittelten Distanzwerte angibt. Sobald alle 100 ermittelten Distanzwerte einem entsprechenden Bin verarbeitet wurden, wird das Bin mit der höchsten Anzahl an zugeordneten Distanzwerten im Verfahrensschritt 160 ermittelt und ein Durchschnittsdistanzwert aller ermittelten Distanzwerte, die diesem Bin zugeordnet wurden, berechnet (Verfahrensschritt 170). Dieser Durchschnittsdistanzwert gibt somit den wahrscheinlichsten Distanzwert an und wird als Erwartungswert verwendet, um einen normalverteilten finalen Distanzwert zu ermitteln (Verfahrensschritt 180).

Die Standardabweichung dieser Normalverteilung wird vorab festgelegt oder basierend auf den zuvor ermittelten Distanzwerten berechnet.

Weiterhin wird in Verfahrensschritt 190 die Validität des Durchschnittsdistanzwerts unter Verwendung einer Bernoulli-Verteilung ermittelt.

Wenn die Validitätsprüfung ergibt, dass der Durchschnittdistanzwert valide ist, so wird der finale normalverteilte Distanzwert ausgegeben (Verfahrensschritt 200). In allen anderen Fällen wird kein Ausgabewert ausgegeben.

Fig. 3a veranschaulicht einen von einem Ausgangspunkt 14 ausgehenden Referenzlichtstrahl 16 und eine Vielzahl von von dem Ausgangspunkt 14 ausgehenden Hilfslichtstrahlen 18 mit unterschiedlichen Azimut- und/oder Höhenwinkeln, wobei die unterschiedlichen Lichtstrahlen 16, 18 als Pfeile dargestellt werden und wobei der Azimut- und/oder Höhenwinkel der unterschiedlichen Hilfslichtstrahlen 18 einer Normalverteilung folgen. Die in Fig. 3a gezeigten Hilfslichtstrahlen 18 sind durch eine Addition des Azimutwinkels des Referenzlichtstrahls 16 und des Höhenwinkels des Referenzlichtstrahls 16 mit zufälligen Werten einer normalverteilten Rauschfunktion generiert worden.

Fig. 3b zeigt ein Diagramm des Azimut- und Höhenwinkelrauschens für eine jeweilige Standardabweichung von $\sigma_{Azimut} = 0.326°$ and $\sigma_{Höhen} = 0.275°$ mit 5000 Datenpunkten. Das Azimut- und Höhenwinkelrauschen wird beispielsweise zu dem Azimut- und Höhenwinkel des Referenzlichtstrahls 16 addiert, um die Vielzahl von Hilfslichtstrahlen 18 zu erzeugen.

Fig. 3c zeigt ein Diagramm des Azimut- und Höhenwinkelrauschens aus Fig. 3b, wobei 100 Datenpunkte zufällig ausgewählt wurden, welche dazu verwendet werden um die Hilfslichtstrahlen 18 zu berechnen.

Fig. 4a zeigt eine 2-dimensionale Darstellung eines virtuellen Lichtstrahlkegels 22 in der virtuellen Testumgebung 4 mit einem ersten virtuellen Objekt 24 und einem zweiten virtuellen Objekt 26, wobei zwischen dem ersten virtuellen Objekt 24 und dem Ausgangspunkt 14 eine erste Distanz $r_1 = 29.5$ m liegt und zwischen dem zweiten virtuellen Objekt 26 und dem Ausgangspunkt 14 eine Distanz $r_2 = 29.65$ m liegt. Der Lichtstrahlkegel 22 umfasst den Referenzlichtstrahl 16 sowie die 100 ausgewählten Hilfslichtstrahlen 18, die jeweils unterschiedliche Azimut- und/oder Höhenwinkel aufweisen und vom selben Ausgangspunkt 14 ausgehen. Dabei ist eine so definierte Breite des Lichtstrahlkegels 22 durch die Statistik des Strahlprofils, d.h. durch Azimutwinkel und/oder Höhenwinkel der Hilfslichtstrahlen, festgelegt.

Gemäß dem in Fig. 2 beschriebenen Verfahren wird anschließend das in Fig. 4b gezeigte Histogramm mit einer Bingröße von 7.8 cm ermittelt. Auf Fig. 4b ist ersichtlich, dass zwei Bins mit einer erhöhten Anzahl an ermittelten Distanzwerten ermittelt wurden, die Auftreffpunkten jeweils eindeutig auf der ersten oder zweiten virtuellen Objekt 24, 26 entsprechen. Basierend auf dem in Fig. 2 beschriebenen Verfahren wird jedoch nur das Bin mit der größten Anzahl an ermittelten Distanzwerten für die weitere Berechnung des Durchschnittsdistanzwerts berücksichtigt. Im vorliegenden Fall ergibt sich ein Durchschnittsdistanzwert von 29.49 m, welcher als Erwartungswert für die Normalverteilung dient. Zusätzlich oder alternativ ist es auch möglich, dass bei einer Feststellung, dass das Histogramm zwei oder mehr Maxima aufweist, ein Warnsignal ausgegeben wird, welches angibt, dass kein eindeutiger Distanzwert ermittelt werden konnte. Insbesondere kann hiermit eine Multi-Echo-Situation und/oder ein Kantentreffer erkannt werden.

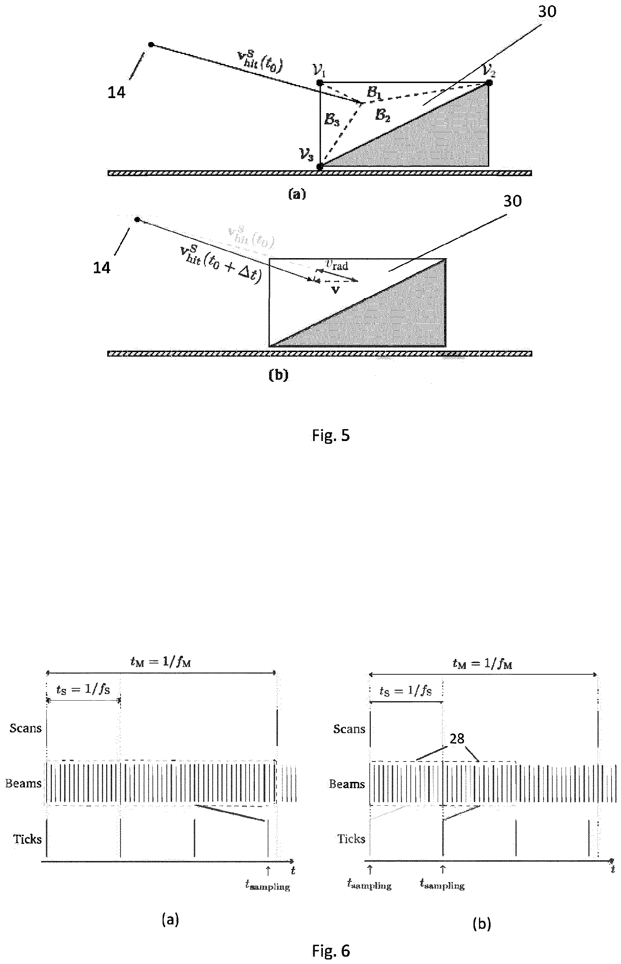

Fig. 5 veranschaulicht die Methode zur Berechnung der Radialgeschwindigkeit eines Auftreffpunkts des virtuellen Sendesignals auf dem virtuellen Objekt mit Bezug auf den virtuellen Sensor bzw. den Ausgangpunkt 4 des virtuellen Sendesignals. Hierfür wird zu einem Zeitpunkt $t = t_0$ ein Auftreffpunkt eines ersten virtuellen Lichtstrahls innerhalb eines durch ein Gitter definierten virtuellen Objekts 30 ermittelt, wobei die genaue Position des Auftreffpunkts mit Bezug auf die Ecken $V_1$, $V_2$ und $V_3$ des Gitters ermittelt wird. Basierend auf den Koordinaten des Auftreffpunkt in der virtuellen Testumgebung und dem Ausgangspunkt wird ein Ortsvektor $v^s_{hit}(t_0)$ ermittelt.

Zu einem Zeitpunkt $t = t_0 + \Delta t$ wird die aktuelle Position des Auftreffpunktes relativ zum virtuellen Sensor $v^s_{hit}(t_0 + \Delta t)$ auf Basis der Information der Positionierung des Auftreffpunkts innerhalb des Gitters ermittelt.

Basierend auf den beiden Ortsvektoren wird der Geschwindigkeitsvektor v des Auftreffpunkts des virtuellen Sendesignals auf dem virtuellen Objekt 30 ermittelt. Beispielsweise wird der Geschwindigkeitsvektor v durch die folgende Gleichung bestimmt:

$$v = \frac{v^s_{hit}(t_0 + \Delta t) - v^s_{hit}(t_0)}{\Delta t}$$

Anschließend wird die Radialgeschwindigkeit durch die Projektion des Geschwindigkeitsvektors v auf den Ortsvektor $v^s_{hit}(t_0)$ ermittelt, wie in Fig. 5 gezeigt.

Fig. 6 veranschaulicht zwei unterschiedliche Möglichkeiten, um die von dem Simulationsmodell erzeugten Daten zu verarbeiten. In Fig. 6a wird eine Vielzahl von bis zu einer Messzeit $t_M$ erfassten virtuellen Lichtstrahlen gleichzeitig verarbeitet. In diesem Fall spricht man auch von einer sogenannten Snapshot-Verarbeitung.

Fig. 6b hingegen veranschaulicht eine Möglichkeit, bei der eine Vielzahl von bis zu der Messzeit $t_M$ erfassten virtuellen Lichtstrahlen in eine vordefinierte Anzahl an Subsets 28, welche jeweils einer gleichen Zeitdauer entsprechen, eingeteilt werden, wobei die einem Subset 28 zugehörigen virtuellen Lichtstrahlen gemeinsam verarbeitet werden. In diesem Fall spricht man von einem sogenannten Scanning.

Bezugszeichenliste

| 2 | Verfahren zur Modellierung eines Sensors |
| 4 | virtuelle Testumgebung |
| 6 | virtuelle Fahrzeuge |
| 8 | virtuelle Straßenschilder |
| 10 | virtuelle Straßenmarkierungen |
| 12 | virtuelle Gebäude |
| 14 | Ausgangspunkt |
| 16 | Referenzlichtstrahl |
| 18 | Hilfslichtstrahlen |
| 22 | Lichtstrahlkegel |
| 24 | erstes virtuelles Objekt |
| 26 | zweiten virtuelles Objekt |
| 28 | Subsets |
| 30 | virtuelles Objekt |
| 100-200 | Verfahrensschritte |

Patentansprüche

1.  Computerimplementiertes Verfahren (2) zur Modellierung eines Sensors, insbesondere eines FMCW-LiDAR-Sensors zur Abstandsmessung, in einer virtuellen Testumgebung (4), wobei:
    ein Simulationsmodell definiert wird, wobei das Simulationsmodell einen virtuellen Sensor und die virtuelle Testumgebung (4) umfasst, wobei bei dem Verfahren (2):

    ein von dem virtuellen Sensor entsendetes virtuelles Sendesignal in der virtuellen Testumgebung (4) simuliert wird;
    festgestellt wird, ob das virtuelle Sendesignal an einem Auftreffpunkt auf ein virtuelles Objekt (30) in der virtuellen Testumgebung (4) trifft;
    bei einer positiven Feststellung eine von dem virtuellen Sensor bis zu dem Auftreffpunkt zurückgelegte Distanz des virtuellen Sendesignals in der virtuellen Testumgebung (4) berechnet wird; und
    zumindest ein Ausgabewert des virtuellen Sensors basierend auf der berechneten Distanz ermittelt wird,
    wobei die Ermittlung des Ausgabewerts ferner basierend auf zumindest einem Parameter des Simulationsmodells erfolgt, wobei der Parameter und/oder der Ausgabewert durch eine probabilistische Verteilung modelliert werden, wobei der Parameter einen Azimutwinkel des virtuellen Sendesignals und/oder einen Höhenwinkel des virtuellen Sendesignals umfasst, wobei das virtuelle Sendesignal, insbesondere nur, basierend auf dem Azimutwinkel, dem Höhenwinkel und einem Ausgangspunkt (14) des virtuellen Sendesignals simuliert wird, wobei das Verfahren (2) ferner umfasst, dass:

der Azimutwinkel und Höhenwinkel des virtuellen Sendesignals durch eine probabilistische Verteilung mit einem vordefinierten Referenzazimutwinkel und einem vordefinierten Referenzhöhenwinkel als Erwartungswert modelliert werden;
eine Vielzahl von unterschiedlichen virtuellen Hilfssendesignalen (18), deren Azimutwinkel und Höhenwinkel sich vom Referenzazimutwinkel und Referenzhöhenwinkel unterscheiden, basierend auf der probabilistischen Verteilung des virtuellen Sendesignals ausgewählt werden;
für jedes virtuelle Hilfssendesignal (18) festgestellt wird, ob das virtuelle Hilfssendesignal an dem Auftreffpunkt auf das virtuelle Objekt (30) und/oder an wenigstens einem weiteren Auftreffpunkt auf wenigstens ein weiteres virtuelles Objekt trifft; bei einer positiven Feststellung eine von dem virtuellen Sensor bis zu dem Auftreffpunkt zurückgelegte Distanz des virtuellen Hilfssendesignals in der virtuellen Testumgebung (4) berechnet wird; und
basierend auf der Vielzahl von berechneten Distanzwerten ein finaler Distanzwert ermittelt wird.

2. Verfahren (2) nach Anspruch 1, wobei durch die probabilistische Verteilung Rauschen in dem Ausgabewert erzeugt wird.

3. Verfahren (2) nach einem der vorstehenden Ansprüche, wobei die probabilistische Verteilung eine Normalverteilung umfasst.

4. Verfahren (2) nach Anspruch 1, wobei der finale Distanzwert dadurch ermittelt wird, dass:

eine vordefinierte Anzahl an Bins gleicher Größe für einen vordefinierten Distanzbereich initialisiert wird, wobei jedes Bin einem unterschiedlichen Teilbereich innerhalb des vordefinierten Distanzbereichs zugeordnet ist;
für jedes Hilfssendesignal (18) ermittelt wird, ob das entsprechende virtuelle Sendesignal mit dem virtuellen Objekt (30) und/oder dem wenigstens einen weiteren virtuellen Objekt in der virtuellen Testumgebung (4), insbesondere in dem vordefinierten Distanzbereich, einen jeweiligen Auftreffpunkt aufweist und bei einer positiven Ermittlung ein zugehöriger Distanzwert vom Ausgangspunkt (14) zu dem jeweiligen Auftreffpunkt ermittelt wird, wobei jeder Distanzwert einem entsprechenden Bin zugeordnet wird;
ein durchschnittlicher Distanzwert basierend auf den Distanzwerten berechnet wird, die dem Bin zugehörig sind, welches die höchste Anzahl an zugeordneten Distanzwerten aufweist;
der finale Distanzwert mittels einer probabilistischen Verteilung basierend auf dem durchschnittlichen Distanzwert modelliert wird und als Ausgabewert festgelegt wird.

5. Verfahren (2) nach einem der vorstehenden Ansprüche, wobei die Ermittlung einer Radialgeschwindigkeit eines Auftreffpunkts i in Bezug auf den virtuellen Sensor umfasst, dass:

der Auftreffpunkt $i$ des virtuellen Sendesignals auf dem virtuellen Objekt (30) zu einem Zeitpunkt $t$ ermittelt wird, wobei die Position des Auftreffpunkts $v_{hit}(t)$ auf dem virtuellen Objekt (30) in der dreidimensionalen, virtuellen Testumgebung (4) ermittelt wird;
zu einem Zeitpunkt $t + \Delta t$, die aktuelle Position des Auftreffpunktes $v_{hit}(t + \Delta t)$ auf dem virtuellen Objekt (30) in der dreidimensionalen, virtuellen Testumgebung (4) ermittelt wird; und
zu einem Zeitpunkt $t + \Delta t$ basierend auf den zwei zeitlich aufeinanderfolgenden Positionen des Auftreffpunkts $v_{hit}(t)$ und $v_{hit}(t + \Delta t)$ der dreidimensionale Geschwindigkeitsvektor des Auftreffpunkts i bestimmt wird und durch Projektion auf die Richtung des gesendeten virtuellen Sendesignals zum Zeitpunkt t in der virtuellen Testumgebung (4) die Radialgeschwindigkeit des Auftreffpunkts $i$ in Bezug auf den virtuellen Sensor ermittelt wird.

6. Verfahren (2) nach einem der vorstehenden Ansprüche, wobei basierend auf einer distanzabhängigen Wahrscheinlichkeit der Erkennung eines Objekts (30) eine Validität des Ausgabewerts ermittelt wird.

7. Verfahren (2) nach einem der vorstehenden Ansprüche, wobei zur Erstellung der virtuellen Testumgebung (4) physische Sensordaten und/oder physische Positionsdaten eines realen Sensors ausgewertet werden.

**8.** Verfahren (2) nach einem der vorstehenden Ansprüche,
wobei in der virtuellen Testumgebung (4) gewonnene Informationen, insbesondere die Ausgabewerte, dazu verwendet werden, einen realen Sensor für den realen Betrieb zu konfigurieren.

**9.** Verfahren (2) nach einem der vorstehenden Ansprüche,
wobei basierend auf Daten der virtuellen Testumgebung (4) und/oder Daten des virtuellen Sensors Annotationsdaten, beispielsweise Metadaten oder Daten zu virtuellen Objektes (30) in der virtuellen Testumgebung (4), erzeugt werden.

**10.** Verfahren (2) nach Anspruch 9,
wobei mittels der durch das Simulationsmodell erzeugten Daten und/oder der Annotationsdaten KI-Modelle für mobile Roboter und/oder für Flurförderfahrzeuge trainiert werden.

**11.** Verfahren (2) nach einem der vorstehenden Ansprüche,
wobei eine Vielzahl von bis zu einer vordefinierten Messzeit erfassten virtuellen Sendesignalen gleichzeitig verarbeitet werden.

**12.** Verfahren (2) nach einem der vorstehenden Ansprüche,
wobei eine Vielzahl von bis zu einer vordefinierten Messzeit erfassten virtuellen Sendesignalen in eine vordefinierte Anzahl an Subsets (28), welche jeweils einer gleichen Zeitdauer entsprechen, eingeteilt werden, wobei die einem Subset (28) zugehörigen virtuellen Sendesignale gleichzeitig verarbeitet werden.

**13.** System zur Modellierung eines Sensors, insbesondere eines FMCW-LiDAR-Sensors, in einer virtuellen Testumgebung (4), umfassend:
ein Computer, der dazu ausgebildet ist:

ein Simulationsmodell zu definieren, wobei das Simulationsmodell einen virtuellen Sensor und die virtuelle Testumgebung (4) umfasst,
ein von dem virtuellen Sensor entsendetes virtuelles Sendesignal in der virtuellen Testumgebung (4) zu simulieren;
festzustellen, ob das virtuelle Sendesignal an einem Auftreffpunkt auf ein virtuelles Objekt (30) in der virtuellen Testumgebung (4) trifft;
bei einer positiven Feststellung eine von dem virtuellen Sensor bis zu dem Auftreffpunkt zurückgelegte Distanz des virtuellen Sendesignals in der virtuellen Testumgebung (4) zu berechnen; und
zumindest ein Ausgabewert des virtuellen Sensors basierend auf der berechneten Distanz zu ermitteln,
wobei die Ermittlung des Ausgabewerts ferner basierend auf zumindest einem Parameter des Simulationsmodells erfolgt, wobei der Parameter und/oder der Ausgabewert durch eine probabilistische Verteilung modelliert werden, wobei der Parameter einen Azimutwinkel des virtuellen Sendesignals und/oder einen Höhenwinkel des virtuellen Sendesignals umfasst,
wobei das virtuelle Sendesignal, insbesondere nur, basierend auf dem Azimutwinkel, dem Höhenwinkel und einem Ausgangspunkt (14) des virtuellen Sendesignals simuliert wird,
wobei der Computer ferner dazu ausgebildet ist:

den Azimutwinkel und Höhenwinkel des virtuellen Sendesignals durch eine probabilistische Verteilung mit einem vordefinierten Referenzazimutwinkel und einem vordefinierten Referenzhöhenwinkel als Erwartungswert zu modellieren;
eine Vielzahl von unterschiedlichen virtuellen Hilfssendesignalen (18), deren Azimutwinkel und Höhenwinkel sich vom Referenzazimutwinkel und Referenzhöhenwinkel unterscheiden, basierend auf der probabilistischen Verteilung des virtuellen Sendesignals auszuwählen;
für jedes virtuelle Hilfssendesignal (18) festzustellen, ob das virtuelle Hilfssendesignal an dem Auftreffpunkt auf das virtuelle Objekt (30) und/oder an wenigstens einem weiteren Auftreffpunkt auf wenigstens ein weiteres virtuelles Objekt trifft; bei einer positiven Feststellung eine von dem virtuellen Sensor bis zu dem Auftreffpunkt zurückgelegte Distanz des virtuellen Hilfssendesignals in der virtuellen Testumgebung (4) zu berechnen; und
basierend auf der Vielzahl von berechneten Distanzwerten einen finalen Distanzwert zu ermitteln.

## Claims

**1.** A computer-implemented method (2) for modeling a sensor, in particular an FMCW LiDAR sensor for distance measurement, in a virtual test environment (4), wherein:
a simulation model is defined, wherein the simulation model comprises a virtual sensor and the virtual test environment (4), wherein in the method (2):

a virtual transmission signal sent by the virtual sensor is simulated in the virtual test environment (4);
it is determined whether the virtual transmission signal impacts a virtual object (30) at a point of impact in the virtual test environment (4);

in the event of a positive determination, a distance of the virtual transmission signal covered by the virtual sensor up to the point of impact is calculated in the virtual test environment (4); and at least one output value of the virtual sensor is determined based on the calculated distance, wherein the determination of the output value further takes place based on at least one parameter of the simulation model, wherein the parameter and/or the output value is/are modeled by a probabilistic distribution,

wherein the parameter comprises an azimuth angle of the virtual transmission signal and/or an elevation angle of the virtual transmission signal,

wherein the virtual transmission signal is simulated, in particular only, based on the azimuth angle, the elevation angle and a starting point (14) of the virtual transmission signal,

wherein the method (2) further comprises that:

the azimuth angle and elevation angle of the virtual transmission signal are modeled as an expected value by a probabilistic distribution with a predefined reference azimuth angle and a predefined reference elevation angle;

a plurality of different virtual auxiliary transmission signals (18), whose azimuth angle and elevation angle differ from the reference azimuth angle and reference elevation angle, are selected based on the probabilistic distribution of the virtual transmission signal;

for each virtual auxiliary transmission signal (18), it is determined whether the virtual auxiliary transmission signal impacts the virtual object (30) at the point of impact and/or impacts at least one further virtual object at at least one further point of impact;

in the event of a positive determination, a distance of the virtual auxiliary transmission signal covered by the virtual sensor up to the point of impact is calculated in the virtual test environment (4); and

a final distance value is determined based on the plurality of calculated distance values.

2. A method (2) according to claim 1, wherein noise is generated in the output value by the probabilistic distribution.

3. A method (2) according to one of the preceding claims, wherein the probabilistic distribution comprises a normal distribution.

4. A method (2) according to claim 1, wherein the final distance value is determined in that:

a predefined number of bins of the same size is initialized for a predefined distance range, with each bin being assigned to a different subrange within the predefined distance range;

for each auxiliary transmission signal (18), it is determined whether the corresponding virtual transmission signal has a respective point of impact with the virtual object (30) and/or the at least one further virtual object in the virtual test environment (4), in particular in the predefined distance range, and in the event of a positive determination, an associated distance value is determined from the starting point (14) to the respective point of impact, wherein each distance value is assigned to a corresponding bin;

an average distance value is calculated based on the distance values that are associated with the bin which has the highest number of assigned distance values;

the final distance value is modeled by means of a probabilistic distribution based on the average distance value and is defined as the output value.

5. A method (2) according to any one of the preceding claims, wherein the determination of a radial speed of a point of impact i with respect to the virtual sensor comprises that:

the point of impact i of the virtual transmission signal on the virtual object (30) is determined at a point in time $t$, wherein the position of the point of impact $v_{hit}(t)$ on the virtual object (30) is determined in the three-dimensional virtual test environment (4);

at a point in time $t + \Delta t$, the current position of the point of impact $v_{hit}(t + \Delta t)$ on the virtual object (30) is determined in the three-dimensional virtual test environment (4); and

at a point in time $t + \Delta t$, the three-dimensional velocity vector of the point of impact i is determined based on the two temporally consecutive positions of the point of impact $v_{hit}(t)$ and $v_{hit}(t + \Delta t)$ and, by projection in the direction of the transmitted virtual transmission signal, the radial speed of the point of impact $i$ is determined with respect to the virtual sensor in the virtual test environment (4) at the point in time t.

6. A method (2) according to any one of the preceding claims, wherein a validity of the output value is determined based on a distance-dependent probability of recognizing an object (30).

7. A method (2) according to any one of the preceding claims,
wherein physical sensor data and/or physical position data of a real sensor are evaluated to create the virtual test environment (4).

8. A method (2) according to any one of the preceding claims,
wherein information obtained in the virtual test environment (4), in particular the output values, is used to configure a real sensor for real operation.

9. A method (2) according to any one of the preceding claims,
wherein annotation data, for example metadata or data on virtual objects (30) in the virtual test environment (4), are generated based on data of the virtual test environment (4) and/or data of the virtual sensor.

10. A method (2) according to claim 9,
wherein AI models for mobile robots and/or for fork-lift trucks are trained by means of the data generated by the simulation model and/or the annotation data.

11. A method (2) according to any one of the preceding claims,
wherein a plurality of virtual transmission signals acquired up to a predefined measurement time are processed simultaneously.

12. A method (2) according to any one of the preceding claims,
wherein a plurality of virtual transmission signals acquired up to a predefined measurement time are divided into a predefined number of subsets (28) which each correspond to an equal time duration, wherein the virtual transmission signals belonging to a subset (28) are processed simultaneously.

13. A system for modeling a sensor, in particular an FMCW LiDAR sensor, in a virtual test environment (4), said system comprising:
a computer which is configured:

to define a simulation model, wherein the simulation model comprises a virtual sensor and the virtual test environment (4);
to simulate a virtual transmission signal sent by the virtual sensor in the virtual test environment (4);
to determine whether the virtual transmission signal impacts a virtual object (30) at a point of impact in the virtual test environment (4);
in the event of a positive determination, to calculate a distance of the virtual transmission signal covered by the virtual sensor up to the point of impact in the virtual test environment (4); and
to determine at least one output value of the virtual sensor based on the calculated distance,
wherein the determination of the output value further takes place based on at least one parameter of the simulation model, wherein the parameter and/or the output value is/are modeled by a probabilistic distribution,
wherein the parameter comprises an azimuth angle of the virtual transmission signal and/or an elevation angle of the virtual transmission signal,
wherein the virtual transmission signal is simulated, in particular only, based on the azimuth angle, the elevation angle and a starting point (14) of the virtual transmission signal,
wherein the computer is further configured:

to model the azimuth angle and elevation angle of the virtual transmission signal as an expected value by a probabilistic distribution with a predefined reference azimuth angle and a predefined reference elevation angle;
to select a plurality of different virtual auxiliary transmission signals (18), whose azimuth angle and elevation angle differ from the reference azimuth angle and reference elevation angle, based on the probabilistic distribution of the virtual transmission signal;
for each virtual auxiliary transmission signal (18), to determine whether the virtual auxiliary transmission signal impacts the virtual object (30) at the point of impact and/or impacts at least one further virtual object at at least one further point of impact; in the event of a positive determination, to calculate a distance of the virtual auxiliary transmission signal covered by the virtual sensor up to the point of impact in the virtual test environment (4); and
to determine a final distance value based on the plurality of calculated distance values.

## Revendications

1. Procédé (2) mis en oeuvre par ordinateur pour la modélisation d'un capteur, en particulier d'un capteur LiDAR FMCW de mesure de distance, dans un environnement de test virtuel (4), consistant à :

définir un modèle de simulation, le modèle de simulation comprenant un capteur virtuel et l'environnement de test virtuel (4),

le procédé (2) consistant en outre à :

> simuler un signal d'émission virtuel, envoyé par le capteur virtuel, dans l'environnement de test virtuel (4) ;
> déterminer si le signal d'émission virtuel rencontre un objet virtuel (30) dans l'environnement de test virtuel (4) à un point d'impact ;
> si la détermination est positive, calculer une distance du signal d'émission virtuel parcourue depuis le capteur virtuel jusqu'au point d'impact dans l'environnement de test virtuel (4) ; et
> déterminer au moins une valeur de sortie du capteur virtuel en se basant sur la distance calculée,
> la détermination de la valeur de sortie se faisant en outre sur la base d'au moins un paramètre du modèle de simulation, le paramètre et/ou la valeur de sortie étant modélisés par une distribution probabiliste,
> le paramètre comprenant un angle d'azimut du signal d'émission virtuel et/ou un angle d'élévation du signal d'émission virtuel,
> le signal d'émission virtuel étant simulé, en particulier uniquement, sur la base de l'angle d'azimut, de l'angle d'élévation et d'un point de départ (14) du signal d'émission virtuel,
> le procédé (2) consistant en outre à :
>
>> modéliser l'angle d'azimut et l'angle d'élévation du signal d'émission virtuel par une distribution probabiliste avec un angle d'azimut de référence prédéfini et avec un angle d'élévation de référence prédéfini comme valeur attendue ;
>> sélectionner une pluralité de signaux d'émission virtuels auxiliaires (18) différents dont les angles d'azimut et les angles d'élévation diffèrent de l'angle d'azimut de référence et de l'angle d'élévation de référence, en se basant sur la distribution probabiliste du signal d'émission virtuel ;
>> déterminer pour chaque signal d'émission virtuel auxiliaire (18) si le signal d'émission virtuel auxiliaire rencontre l'objet virtuel (30) au point d'impact et/ou au moins un autre objet virtuel à au moins un autre point d'impact ; si la détermination est positive, calculer une distance du signal d'émission virtuel auxiliaire parcourue depuis le capteur virtuel jusqu'au point d'impact dans l'environnement de test virtuel (4) ; et

> déterminer une valeur de distance finale en se basant sur la pluralité de valeurs de distance calculées.

2. Procédé (2) selon la revendication 1, dans lequel du bruit est généré dans la valeur de sortie par la distribution probabiliste.

3. Procédé (2) selon l'une des revendications précédentes, dans lequel la distribution probabiliste inclut une distribution normale.

4. Procédé (2) selon la revendication 1, dans lequel la détermination de la valeur de distance finale consiste à :

> initialiser un nombre prédéfini de segments de même taille pour une plage de distance prédéfinie, chaque segment étant associé à une sous-plage différente dans la plage de distance prédéfinie ;
> déterminer pour chaque signal d'émission auxiliaire (18) si le signal d'émission virtuel correspondant présente un point d'impact respectif avec l'objet virtuel (30) et/ou ledit au moins un autre objet virtuel dans l'environnement de test virtuel (4), en particulier dans la plage de distance prédéfinie, et, si la détermination est positive, déterminer une valeur de distance associée du point de départ (14) au point d'impact respectif, chaque valeur de distance étant associée à un segment correspondant ;
> calculer une valeur de distance moyenne en se basant sur les valeurs de distance apparaissant au segment qui présente le plus grand nombre de valeurs de distance associées ;
> modéliser la valeur de distance finale au moyen d'une distribution probabiliste en se basant sur la valeur de distance moyenne et la fixer comme valeur de sortie.

5. Procédé (2) selon l'une des revendications précédentes, dans lequel la détermination d'une vitesse radiale d'un point d'impact i par rapport au capteur virtuel consiste à :

> déterminer le point d'impact i du signal d'émission virtuel sur l'objet virtuel (30) à un instant $t$, la position du point d'impact $v_{hit}(t)$ sur l'objet virtuel (30) étant déterminée dans l'environnement de test virtuel (4) tridimensionnel ;
> à un instant $t + \Delta t$, déterminer la position actuelle du point d'impact $v_{hit}(t + \Delta t)$ sur l'objet virtuel (30) dans l'environnement de test virtuel (4) tridimensionnel ; et
> à un instant $t + \Delta t$, sur la base des deux positions successives dans le temps du point d'impact $v_{hit}(t)$ et $v_{hit}(t + \Delta t)$, déterminer le vecteur de vitesse tridimensionnel du point d'impact $i$ et, par projection sur la direction du signal d'émission virtuel émis, à l'instant $t$ dans l'environnement de test virtuel (4), déterminer la vitesse radiale du point d'impact $i$ par rapport au capteur virtuel.

6. Procédé (2) selon l'une des revendications précédentes,
dans lequel une validité de la valeur de sortie est déterminée sur la base d'une probabilité de détection d'un objet (30), laquelle dépend de la distance.

7. Procédé (2) selon l'une des revendications précédentes,
dans lequel, pour créer l'environnement de test virtuel (4), des données de capteur physiques et/ou des données de position physiques d'un capteur réel sont évaluées.

8. Procédé (2) selon l'une des revendications précédentes,
dans lequel les informations obtenues dans l'environnement de test virtuel (4), en particulier les valeurs de sortie, sont utilisées pour configurer un capteur réel pour le fonctionnement réel.

9. Procédé (2) selon l'une des revendications précédentes,
dans lequel, sur la base de données de l'environnement de test virtuel (4) et/ou de données du capteur virtuel, des données d'annotation, par exemple des métadonnées ou des données relatives à des objets virtuels (30) dans l'environnement de test virtuel (4), sont générées.

10. Procédé (2) selon la revendication 9,
dans lequel des modèles d'IA pour des robots mobiles et/ou pour des chariots de manutention sont entraînés au moyen des données générées par le modèle de simulation et/ou au moyen des données d'annotation.

11. Procédé (2) selon l'une des revendications précédentes,
dans lequel une pluralité de signaux d'émission virtuels détectés jusqu'à un temps de mesure prédéfini sont traités simultanément.

12. Procédé (2) selon l'une des revendications précédentes,
dans lequel une pluralité de signaux d'émission virtuels détectés jusqu'à un temps de mesure prédéfini sont divisés en un nombre prédéfini de sous-ensembles (28) correspondant chacun à une durée égale, les signaux d'émission virtuels associés à un sous-ensemble (28) étant traités simultanément.

13. Système de modélisation d'un capteur, en particulier d'un capteur LiDAR FMCW, dans un environnement de test virtuel (4), comprenant :
un ordinateur conçu pour :

définir un modèle de simulation, le modèle de simulation comprenant un capteur virtuel et l'environnement de test virtuel (4),
simuler un signal d'émission virtuel, envoyé par le capteur virtuel, dans l'environnement de test virtuel (4) ;
déterminer si le signal d'émission virtuel rencontre un objet virtuel (30) dans l'environnement de test virtuel (4) à un point d'impact ;
si la détermination est positive, calculer une distance du signal d'émission virtuel parcourue depuis le capteur virtuel jusqu'au point d'impact dans l'environnement de test virtuel (4) ; et
déterminer au moins une valeur de sortie du capteur virtuel en se basant sur la distance calculée,
la détermination de la valeur de sortie se faisant en outre sur la base d'au moins un paramètre du modèle de simulation, le paramètre et/ou la valeur de sortie étant modélisés par une distribution probabiliste, le paramètre comprenant un angle d'azimut du signal d'émission virtuel et/ou un angle d'élévation du signal d'émission virtuel, le signal d'émission virtuel étant simulé, en particulier uniquement, sur la base de l'angle d'azimut, de l'angle d'élévation et d'un point de départ (14) du signal d'émission virtuel, l'ordinateur étant en outre conçu pour :

modéliser l'angle d'azimut et l'angle d'élévation du signal d'émission virtuel par une distribution probabiliste avec un angle d'azimut de référence prédéfini et avec un angle d'élévation de référence prédéfini comme valeur attendue ;
sélectionner une pluralité de signaux d'émission virtuels auxiliaires (18) différents dont les angles d'azimut et les angles d'élévation sont différents de l'angle d'azimut de référence et de l'angle d'élévation de référence, en se basant sur la distribution probabiliste du signal d'émission virtuel ;
déterminer pour chaque signal d'émission virtuel auxiliaire (18) si le signal d'émission virtuel auxiliaire rencontre l'objet virtuel (30) au point d'impact et/ou au moins un autre objet virtuel à au moins un autre point d'impact ; si la détermination est positive, calculer une distance du signal d'émission virtuel auxiliaire parcourue depuis le capteur virtuel jusqu'au point d'impact dans l'environnement de test virtuel (4) ; et déterminer une valeur de distance finale en se basant sur la pluralité de valeurs de distance calculées.

EP 4 372 417 B1

Fig. 1

Start

100

Entsende virtuellen Lichtstrahl mit
vordefiniertem Azimut- und Höhenwinkel

110

Wende probabilistische Verteilung auf
Azimutwinkel und Höhenwinkel an

120

Erzeuge eine Anzahl n an virtuellen
Hilfslichtstrahlen

130

Ermittle für jeden virtuellen Hilfslichtstrahl
einen Distanzwert, der eine
entsprechende zurückgelegte Distanz zu
virtuellem Objekt angibt

140

Initialisiere x Bins in einem vordefinierten
Distanzbereich

150

Ordne jeden ermittelten Distanzwert
einem entsprechenden Bin zu

160

Ermittle das Bin mit der höchsten Anzahl
an zugeordneten Distanzwerten

170

Berechne den Durchschnittsdistanzwert
aller Distanzwerte in diesem Bin

180

Wende probabilistische Verteilung auf den
Durchschnittsdistanzwert an, um finalen
Distanzwert zu erhalten

190

Ermittle basierend auf dem
Durchschnittsdistanzwert eine Validität des
finalen Distanzwertes mittels einer
Bernoulli-Verteilung

200

Gebe validen finalen Distanzwert aus

Fig. 2

Fig. 3a

Fig. 3b

Fig. 3c

Fig. 4a

Fig. 4b

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021004626 A1
- EP 3637138 A1
- US 2022058309 A1
- US 2018203445 A1
- US 2022269279 A1

**In der Beschreibung aufgeführte Nicht-Patentliteratur**

- Modelling and Simulation of a Laser Scanner with Adjustable Pattern as Virtual Prototype for Future Space Missions. **EMDE MARKUS et al.** 2015 3RD INTERNATIONAL CONFERENCE ON ARTIFICIAL INTELLIGENCE, MODELLING AND SIMULATION (AIMS). IEEE, 02. Dezember 2015, 191-196